Europäisches Patentamt

European Patent Office

Office européen des brevets

(19)

(11) **EP 0 658 874 B1**

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(51) Int Cl.[6]: **G10L 9/02**, G10L 9/14, G10L 5/00, G10L 5/04

(21) Anmeldenummer: **94119904.4**

(22) Anmeldetag: **16.12.1994**

(54) **Verfahren und Schaltungsanordnung zur Vergrösserung der Bandbreite von schmalbandigen Sprachsignalen**

Process and circuit for producing from a speech signal with small bandwidth a speech signal with great bandwidth

Procédé et dispositif de circuit pour l'agrandissement de la largeur de signaux de langage à bande étroite

(84) Benannte Vertragsstaaten:
**DE FR GB IT**

(30) Priorität: **18.12.1993 DE 4343366**

(43) Veröffentlichungstag der Anmeldung:
**21.06.1995 Patentblatt 1995/25**

(73) Patentinhaber: **GRUNDIG Aktiengesellschaft 90762 Fürth (DE)**

(72) Erfinder: **Carl, Holger, GRUNDIG E.M.V. D-90762 Fürth (DE)**

(56) Entgegenhaltungen:
**EP-A- 0 138 073          EP-A- 0 418 958
WO-A-94/18668**

EP 0 658 874 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bandbreitenvergrößerung bei bandbegrenzten Sprachsignalen nach dem Oberbegriff des Patentanspruchs 1 oder 2 und eine Schaltungsanordnung nach dem Oberbegriff des Patentanspruchs 7.

Es ist bekannt, daß insbesondere bei einer Fernsprechverbindung die Sprachqualität durch eine Vielzahl zufälliger und systematischer Störungen beeinträchtigt wird. Zu den systematischen Störungen zählen unter anderem permanente Störungen, die durch das Übertragungssystem verursacht werden, wie beispielsweise eine im Sinne der Bandbreitenökonomie erforderliche Bandbegrenzung des zu übertragenden Sprachsignals. Diese Bandbegrenzung weist im wesentlichen zwei nachteilige Effekte auf: durch die Dämpfung der Spektralanteile unterhalb 300 Hz klingt die Sprache blechern, und die Dämpfung der Spektralanteile oberhalb von 3400 Hz führt zu einem dumpfen Klang.

Diese Effekte fallen besonders auf, wenn derart beeinträchtigte Sprachsignale im Wechsel mit solchen zu hören sind, die in hoher Qualität mit einer Bandbreite wie z. B. der des UKW-Rundfunks übertragen werden. Diese Situation tritt beispielsweise bei Telefonbeiträgen in Rundfunk und Fernsehen auf. Ein weiteres Beispiel stellen moderne Autotelefone dar, die häufig die Möglichkeit des Freisprechens bieten. Hierfür können zweckmäßigerweise die Verstärker und Lautsprecher einer Auto-Stereo-Anlage benutzt werden. Auch hier wird der krasse Qualitätsunterschied zwischen der schmalbandigen Telefonsprache und einer über das Autoradio empfangenen Nachrichtensendung besonders deutlich.

Man kann den subjektiv empfundenen Qualitätsunterschied auch rechnerisch belegen, indem man zunächst ein Modell für das Langzeit-Leistungsdichtespektrum natürlicher Sprachsignale zugrunde legt. Eine Bandpaßfilterung mit dem Telefonbandpaß führt demnach auf einen Signal-Stör-Abstand von nur noch ungefähr 10 dB, wenn man als Störung hier das Fehlen von Spektralanteilen ansetzt, die Störleistung also gleich der Leistung der durch den Bandpaß unterdrückten Spektralanteile setzt. Von Bedeutung dabei ist, daß dieses bandbegrenzte Signal im Zusammenhang mit Kodierverfahren für Schmalband-Sprachsignale stets als "Originalsignal" bezeichnet wird und daß Signal-Stör-Abstände stets auf der Basis dieses bandbegrenzten Signals ermittelt werden. Vor diesem Hintergrund ist z. B. die Angabe eines Signal-Stör-Abstands von ungefähr 40 dB eines Übertragungssystems, das mit der Log-PCM arbeitet nur noch eingeschränkt als sehr gut zu bezeichnen.

Nicht nur in den genannten Fällen besteht daher häufig der Wunsch, den nachteiligen Eindruck "dünn" klingender Sprache, der durch den Telefonbandpaß entsteht, zu vermeiden.

Aus der EP 298 621 A2 ist ein System zur Erfassung und Kompensation von Störungen der Verbindung zwischen einem Fernsprechapparat und einer zentralen Sprachverarbeitungseinheit bekannt. Hierbei werden zwischen der Sprachverarbeitungseinheit und dem Fernsprechapparat Referenzsignale übertragen und die empfangenen Referenzsignale mit gespeicherten Referenzsignalen verglichen. Dadurch können frequenzabhängige Störungen und Dämpfungen korrigiert werden.

Von Nachteil bei einer solchen Realisierung ist, daß nach jedem Verbindungsaufbau zwischen Sprachverarbeitungseinheit und Fernsprechapparat für eine gewisse Zeit Referenzsignale übertragen werden müssen, was zu längeren Verbindungsdauern und damit erhöhten Gebühren führt. Weiterhin von Nachteil ist, daß bei Störungen, die nur während der Übertragung der Referenzsignale auftreten, die daraus ermittelte Korrektur zu einer Verfälschung der danach übertragenen Sprachsignale führt.

Aus der Veröffentlichung "Neue Klangqualität zum alten Preis mit True Voice", erschienen in der Zeitschrift telekom praxis, Ausgabe 9/93, Seite 8, ist bekannt, bei Ferngesprächen niedrige Frequenzen zu verstärken und die gesamte Tonhöhe des Sprachsignals anzuheben. Dadurch soll eine bessere Sprachqualität erreicht werden.

Von Nachteil bei einer derartigen Veränderung des übertragenen Sprachsignals ist die gleichzeitige Verstärkung von tieffrequenten Störungen. Bei einer merklichen Tonhöhenänderung kann zusätzlich ein sogenannter "Donald-Duck-Effekt" entstehen.

Dadurch wird das ausgegebene Sprachsignal sowohl stärker gestört als auch zusätzlich verfremdet. Ein Erkennen von Personen anhand des ausgegebenen Sprachsignals wird dadurch erschwert.

Der Erfindung liegt daher die Aufgabe zugrunde, eine Teilnehmereinrichtung zur Sprachkommunikation derart auszugestalten, daß das ausgegebene Sprachsignal eine verbesserte Qualität aufweist.

Diese Aufgabe wird dadurch gelöst, daß anhand der durch die LPC-Koeffizienten beschriebenen Einhüllenden des Kurzzeitspektrums eines Sprachsignals, die ein sogenanntes LPC-Spektrum bilden, das übertragene Sprachsignal mit gespeicherten Mustern von LPC-Spektren verglichen und der Grad der Übereinstimmung mit Hilfe eines mathematischen Kriteriums berechnet wird. Aufgrund der für ein breitbandiges Sprachsignal in einem sogenannten LPC-Codebuch abgespeicherten LPC-Koeffizienten können die durch den Telefonbandpaß herausgefilterten Spektralanteile wieder ergänzt werden.

Zur Realisierung der Erfindung werden Verfahren wie in Patentansprüchen 1 und 2 und eine Schaltungsanordnung wie in Patentanspruch 7 vorgesehen.

Das erfindungsgemäße Verfahren weist den Vorteil auf, daß die zu ergänzenden Spektralanteile für jedes LPC-Spektrum individuell festgelegt sind. Dadurch wird eine qualitativ besonders hochwertige spektrale Ergänzung des übertragenen Sprachsignals sowohl bei tiefen als auch bei hohen Frequenzen erreicht. Die Amplituden der ergänzten Spektralanteile können dabei auch größere Werte annehmen als die des übertragenen schmalbandigen Sprachsignals, was es ermöglicht, auch solche Sprachsignale noch zu verbessern, die wesentliche Spektralanteile bei besonders hohen oder tiefen Frequenzen aufweisen. Ein weiterer Vorteil des Verfahrens liegt darin, daß es weitgehend im Spektralbereich durchgeführt wird, wodurch die Erkennung und Ergänzung spektraler Anteile besonders einfach ist.

Eine vorteilhafte Weiterbildung der Erfindung besteht darin, daß die für den Vergleich benutzten gespeicherten LPC-Spektren zusätzlich schmalbandig in einem LPC-Codebuch gespeichert sind, da dadurch eine erhöhte Erkennungssicherheit und eine schnellere Erkennung möglich ist.

In einer Weiterbildung der Erfindung wird das amplitudenoptimierte Log-Spectral-Deviation Maß bzw. das amplitudenoptimierte Itakura-Saito-Abstandsmaß von zu vergleichenden LPC-Spektren als Kriterium benutzt, um Übereinstimmungen festzustellen. Dadurch wird eine hinsichtlich des akustischen Eindrucks optimierte Entscheidung bezüglich der Übereinstimmung von in dem LPC-Codebuch abgespeicherten LPC-Spektren mit dem LPC-Spektrum eines vorliegenden schmalbandigen Sprachsignals ermöglicht.

Gemäß einer zusätzlichen Weiterbildung der Erfindung werden die Amplituden und damit die Leistung der ergänzten Spektralkomponenten an den Pegel des übertragenen Sprachsignals angepaßt. Hierbei wird die Amplitude der ergänzten Spektralanteile so eingestellt, daß die Übereinstimmung des LPC-Spektrums des schmalbandigen Sprachsignals mit dem des gespeicherten LPC-Spektrums im Frequenzbereich des schmalbandigen Sprachsignals z. B. im Sinne eines der vorgenannten Maße maximal ist.

Die Erfindung wird im folgenden näher beschrieben und erläutert. Es zeigt:

Fig. 1 eine Schaltungsanordnung zur Vergrößerung der Bandbreite,

Fig. 2a eine durch LPC-Koeffizienten beschriebene Einhüllende des Kurzzeitspektrums eines breitbandigen Sprachsignals

Fig. 2b das durch den Telefonbandpaß gefilterte LPC-Spektrum aus Fig. 2a,

Fig. 2c das um spektrale Komponenten ergänzte LPC-Spektrum aus Fig. 2b

Fig 2d das breitbandige LPC-Spektrum aus Fig. 2c, bei dem die ergänzten spektralen Komponenten in der Amplitude angepaßt sind.

Im folgenden Ausführungsbeispiel wird von dem Einsatz des Verfahres bei einem Mobiltelefon gemäß der GSM-Spezifikation ausgegangen, bei dem das Sprachsignal auch über herkömmliche Telefonleitungen übertragen werden kann. Der Einsatz in anderen Einrichtungen zur Sprachkommunikation ist jedoch ebenso möglich.

Aufgrund der Übertragung des Sprachsignals über herkömmliche Telefonleitungen erfolgt eine Bandpaßfilterung. Das Sprachsignal wird auf einen Frequenzbereich von 300 Hz bis 3400 Hz begrenzt. Anschließend wird das bandbegrenzte Sprachsignal abgetastet, quantisiert und linear-prädiktiv codiert. Nach der übertragung erfolgt im Empfänger die Signalaufbereitung. Dadurch soll ein qualitativ hochwertiges breitbandiges Sprachsignal durch den Empfänger ausgegeben werden.

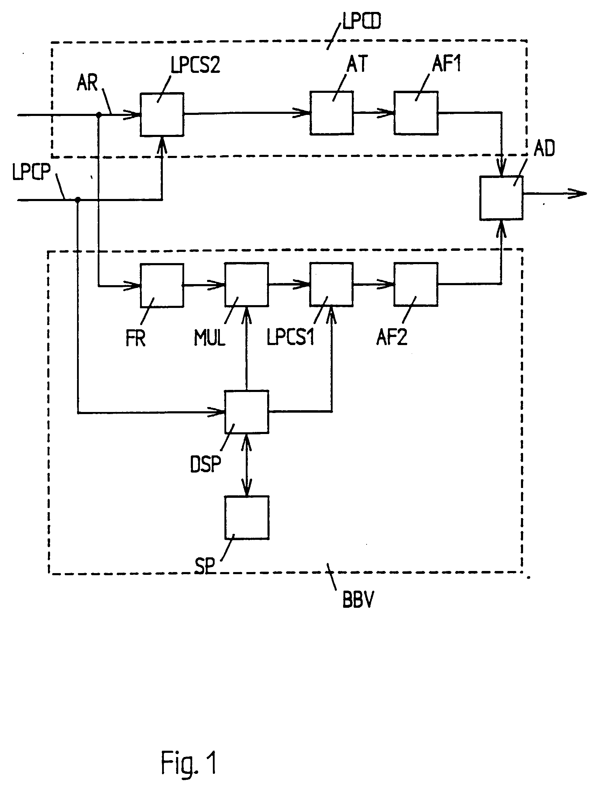

Die Signalaufbereitung umfaßt gemäß Fig. 1 eine bekannte Decodierung in der Funktionsgruppe LPCD, auf die hier nur kurz eingegangen werden soll, und eine Bandbreitenvergrößerung in der Funktionsgruppe BBV.

Bei der hier gewählten linear-prädiktiven Codierung wird mit einem ersten Signal LPCP ein Parametersatz, der die Einhüllende eines Kurzzeitspektrums charakterisiert, und in einem zweiten Signal Information über das Anregungssignal AR übertragen. Das Anregungssignal AR entspricht dabei dem Kurzzeitprädiktionsfehlersignal der Codierung und beinhaltet die spektrale Feinstruktur des Sprachsignals. Mit dem Signal LPCP werden die Filterkoeffizienten für das LPC-Synthesefilter übertragen. Diese beinhalten die Information über die Form der Einhüllenden des Kurzzeitspektrums des Sprachsignals. Wird das Anregungssignal AR einem LPC-Synthesefilter LPCS2 zugeleitet, das die mit dem Signal LPCP übertragenen Filterkoeffizienten aufweist, so wird das Sprachsignal rekonstruiert.

Es können die ohnehin vorhandene Decodierung LPCD und die zusätzliche Bandbreitenvergrößerung BBV in parallel arbeitenden Baugruppen durchgeführt werden. Dadurch erfordert die Bandbreitenvergrößerung BBV im wesentlichen nur eine um die Laufzeit des Ausgangsfilters AF1 erhöhte zeitliche Verzögerung.

Zur Bandbreitenvergrößerung BBV wird das im Decoder des GSM-Systems rekonstruierte Anregungssignal AR zunächst einer Baugruppe FR zur Frequenzregeneration zugeleitet. Durch die Frequenzregeneration FR wird ein speziell für die Bandbreitenvergrößerung geeignetes Anregungssignal aus dem Schmalband-Anregungssignal AR erzeugt. Zur Realisierung der Frequenzregeneration FR, die eine Abtastratenerhöhung beinhaltet, gibt es drei Möglichkeiten:

- die Anwendung einer nichtlinearen Kennlinie auf das Eingangssignal,

- die Vervielfachung des Basisbandspektrums des Eingangssignals (z. B. durch Spreizung) und

- die Erzeugung von Pitchpulsen oder Schwingungen für stimmhafte oder Rauschen für stimmlose Sprache.

Bei Hörtests hat sich für tiefpaßgefilterte Signale, bei denen nur eine spektrale Ergänzung bei hohen Frequenzen erforderlich ist, die Spreizung des Anregungssignals AR, für Bandpaßsignale, bei denen hoch- und tieffrequente Spektralanteile ergänzt werden, hat sich die Vollweg-Gleichrichtung des Anregungssignals AR als optimale Art der Frequenzregeneration FR erwiesen.

Anschließend wird das Ausgangssignal der Frequenzregeneration FR in einem Multiplizierer MUL neu skaliert. Dadurch wird die Amplitude und damit die Leistung der zu ergänzenden Spektralkomponenten festgelegt. Der erforderliche Skalierungsfaktor wird von einer Steuereinheit DSP, beispielsweise einem digitalen Signalprozessor, aufgrund der übertragenen Parameter LPCP der linear-prädiktiven Codierung ermittelt.

Die Koeffizienten für die LPC-Synthesefilter, die die Einhüllende festlegen, dienen auch dazu, die übertragene Sprache für einen Vergleich in ihre phonetischen Bestandteile zu zerlegen. Die Steuereinheit DSP vergleicht hierfür die mit dem Signal LPCP übertragenen Einhüllenden von Kurzzeitspektren, die das Sprachsignal z.B. für eine Dauer von 20 ms repräsentieren, mit im Speicher SP abgespeicherten Mustern von Einhüllenden, die ein sogenanntes LPC-Codebuch bilden. Der Vergleich bezieht sich in einem ersten Schritt lediglich auf die Form der Einhüllenden der Kurzzeitspektren und nicht auf deren Amplitude. In einem zweiten Schritt wird dann die Amplitude der Einhüllenden festgelegt.

Als Kriterium für die Bewertung, wie stark die Übereinstimmung zwischen übertragener und gespeicherter Form der Einhüllenden ist, wird das Itakura-Saito-Abstandsmaß benutzt. Dies ist für kleine Abweichungen in den Einhüllenden identisch mit der Log-Spectral-Deviation (quadratischer Mittelwert).

Eine für den Formvergleich geeignete Form des Itakura-Saito-Abstands ist:

$$\frac{\dfrac{1}{\mu_o - \mu_u + 1}\displaystyle\sum_{\mu=\mu_u}^{\mu_o}\left|\hat{A}_{FFT}^{(v)}(\mu)\right|^2\left|S_{FFT}(\mu)\right|^2}{\exp\left[\dfrac{1}{\mu_o - \mu_u + 1}\displaystyle\sum_{\mu=\mu_u}^{\mu_o}\ln\left|\hat{A}_{FFT}^{(v)}(\mu)\right|^2\left|S_{FFT}(\mu)\right|^2\right]} - 1$$

$$\hat{A}_{FFT}^{(v)}(\mu) = FFT_M\left\{\hat{a}_i^{(v)}\right\} = \sum_{i=0}^{p}\hat{a}_i^{(v)}e^{-\frac{2\pi}{M}\mu i}$$

$$S_{FFT}(\mu) = FFT_{M/2}\left\{s(k)\right\} = \sum_{k=0}^{N}s(k)e^{-\frac{2\pi}{M/2}\mu k} \approx \frac{\sigma^{(SB)}}{\displaystyle\sum_{k=0}^{p^{(SB)}}a_k^{(SB)}e^{-\frac{2\pi}{M/2}\mu k}}$$

Die $\hat{a}_i^{(v)}$ sind die in Form eines LPC-Codebuches im Speicher SP abgelegten Koeffizienten der linear-prädiktiv codierten breitbandigen Kurzzeitspektren. $s(k)$ ist das empfangene schmalbandige Sprachsignal. Die $a_k^{(SB)}$ sind die LPC-Parameter, die in der Baugruppe LPCD empfangen wurden, $p^{(SB)}$ die Anzahl dieser LPC-Parameter und $\sigma^{(SB)}$ ist der Pegel des Anregungssignals AR. $\mu_u$ und $\mu_o$ geben die untere und obere Grenze des Frequenzbandes an, innerhalb dessen das Maß ausgewertet wird. Dabei wird davon ausgegangen, daß das schmalbandige Sprachsignal die halbe Bandbreite aufweist (M/2 FFT-Werte) wie die breitbandigen Muster für LPC-Spektren im LPC-Codebuch (M FFT-Werte). Es wird die Einhüllende aus dem Speicher SP ausgewählt, die eine maximale Übereinstimmung mit der Einhüllenden des übertragenen Sprachsignals aufweist.

Im Speicher SP werden bei der Produktion Muster von unterschiedlichen LPC-Spektren abgespeichert, die bei einer großen Anzahl Sprachproben immer wieder festgestellt werden können. Dabei hat sich herausgestellt, daß es ausreicht eine Anzahl von ca. 70 unterschiedlichen LPC-Spektren abzuspeichern, da sich auch bei einer größeren Anzahl abgespeicherter LPC-Spektren die Erkennungssicherheit nicht wesentlich erhöht.

Um die Signalamplitude der anhand ihrer Form ermittelten Einhüllenden festzustellen, wird in einem zweiten Schritt die Amplitude der ermittelten Einhüllenden berechnet. Die optimale Amplitude $\sigma_{opt}$ ergibt sich bei Benutzung des Itakura-Saito-Abstadsmaßes aus der folgenden Näherung:

$$\hat{\sigma}_{opt}^{(IS)^2} \approx \frac{1}{\mu_o - \mu_u + 1} \sum_{\mu=\mu_u}^{\mu_o} \left|\hat{A}_{FFT}^{(v)}(\mu)\right|^2 \left|S_{FFT}(\mu)\right|^2$$

Alternativ kann auch zu jedem im Speicher SP abgelegten LPC-Spektrum ein Korrekturfaktor für die Amplitude abgespeichert sein, der die Amplitude des breitbandigen LPC-Spektrums festlegt.

Bei der Ermittlung der Form der breitbandigen Einhüllenden hat es sich als günstig erwiesen für die Codebuchsuche (Vergleich zwischen empfangenem und gespeichertem Spektrum) nicht die gespeicherten breitbandigen LPC-Spektren, sondern speziell für den Vergleich zusätzlich abgespeicherte schmalbandige LPC-Spektren zu benutzen. Daher ist sowohl ein schmalbandiges LPC-Spektrum für den Vergleich als auch ein breitbandiges LPC-Spektrum zum Ergänzen spektraler Komponenten im Speicher SP gespeichert, wobei jedem schmalbandigen ein breitbandiges LPC-Spektrum zugeordnet ist, das demselben Sprachsignal entspricht. Die Erzeugung dieses Codebuchpaares (schmalbandiges und breitbandiges LPC-Spektrum der gleichen Sprachprobe) findet anhand der bandbegrenzten Versionen der zugrundegelegten Sprachproben statt.

Die aus dem Speicher SP ausgelesenen Filterkoeffizienten werden anschließend von der Steuereinheit DSP dem ersten LPC-Synthesefilter LPCS1 zugeleitet. Dieses erzeugt aus dem skalierten und modifizierten Anregungssignal und den aus dem Speicher SP ausgelesenen Filterkoeffizienten ein breitbandiges Sprachsignal, das einem Ausgangsfilter AF2 zugeleitet wird.

Das Ausgangsfilter AF2 ist eine Bandsperre und filtert die übertragenen Spektralkomponenten aus dem Signal heraus, so daß nur die zu ergänzenden Spektralkomponenten besonders hoher oder niedriger Frequenz dem Addierer AD zugeleitet werden.

In der Funktionsgruppe LPCD zur LPC-Decodierung und Filterung wird das übertragene und decodierte schmalbandige Sprachsignal überabgetastet und gefiltert. Durch die Überabtastung AT wird das Ausgangssignal des zweiten LPC-Synthesefilters LPCS2 auf die gleiche Abtastrate umgesetzt wie das Ausgangssignal des ersten LPC-Synthesefilters LPCS1. Die Rate der Überabtastung AT bestimmt sich daher aus dem Quotienten der Abtastrate des breitbandigen Sprachsignals durch die Abtastrate des schmalbandigen Sprachsignals. Durch das Ausgangsfilter AF1 wird das schmalbandige Sprachsignal auf die übertragungsbandbreite begrenzt, was einer Interpolation entspricht. Die beiden Ausgangsfilter AF1 und AF2 sind so zu wählen, daß ihre Parallelschaltung ein Allpaßfilter ergibt.

Der Addierer AD ergänzt das übertragene schmalbandige Sprachsignal der Funktionsgruppe LPCD mit den ergänzten Signalkomponenten oberhalb und unterhalb der Übertragungsbandbreite zum gewünschten breitbandigen Sprachsignal hoher Qualität.

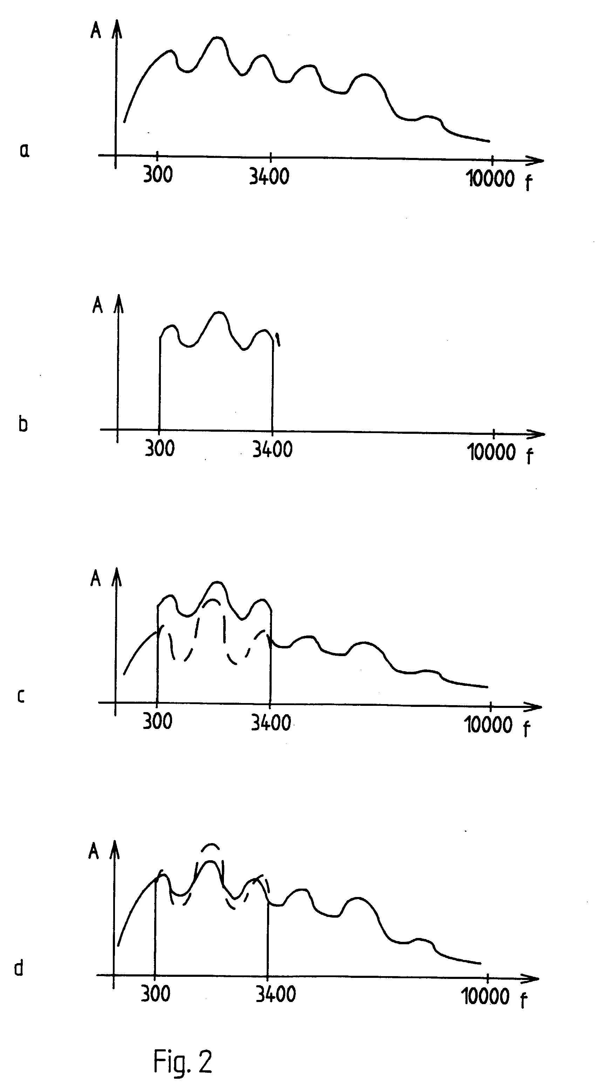

In Fig. 2 sind verschiedene in der Schaltungsanordnung nach Fig. 1 auftretende Einhüllende von Kurzzeitspektren, die durch die Filterkoeffizienten des LPC-Synthesefilters LPCS repräsentiert werden, über der Frequenz f aufgetragen. In Fig. 2a ist beispielhaft eine Einhüllende für ein nicht bandbegrenztes Sprachsignal maximaler Qualität dargestellt. Dieses wird auf der Übertragungsstrecke bandbegrenzt, was eine wesentliche Qualitätsverschlechterung verursacht.

Fig. 2b zeigt die bandbegrenzte Einhüllende. Dabei wird von einer idealen Bandbegrenzung und einer störungsfreien Übertragung ausgegangen. Es wird deutlich, daß vor allem Sprachanteile hoher Frequenz von der Bandbegrenzung betroffen sind, wodurch denkbar ist, daß auch eine spektrale Ergänzung nur bei hohen Frequenzen bereits eine Verbesserung erzielt. Die Einhüllende gemäß Fig. 2b ist auch das Ausgangssignal des Ausgangsfilters AF1.

Fig. 2c zeigt ein um Spektralanteile ergänztes Spektrum, wobei die durch Ausgangsfilter AF2 herausgefilterten Spektralanteile des aus dem Speicher SP ausgelesenen LPC-Spektrums durch eine unterbrochene Linie dargestellt sind. Die ergänzten Spektralanteile müssen noch in der Amplitude angepaßt werden. Dies erfolgt in der Schaltungsanordnung durch den Multiplizierer MUL. Dieses Signal dient nur der anschaulichen Darstellung und tritt in der Schaltungsanordnung nicht auf, da bereits durch die Skalierung des modifizierten Anregungssignals für das erste LPC-Synthesefilter LPCS1 das LPC-Spektrum mit der gewünschten Amplitude erzeugt wird.

In Fig 2d ist die Einhüllende des Ausgangssignals des Addierers AD dargestellt. Im Frequenzbereich bis 300 Hz sind die Spektralkomponenten durch die Funktionsgruppe zur Bandbreitenvergrößerung BBV ergänzt. Im Frequenzbereich zwischen 300 Hz und 3400 Hz wird das übertragene Sprachsignal von der Funktionsgruppe LPCD ausgegeben. Die nur für den Vergleich benötigten Spektralkomponenten des im Speicher SP abgelegten LPC-Spektrums sind durch eine unterbrochene Linie dargestellt. Im Frequenzbereich ab 3400 Hz sind die ausgegebenen Spektralkomponenten wieder durch die Funktionsgruppe BBV ergänzt.

Insbesondere für die Ergänzung tieffrequenter Spektralanteile kann alternativ auch die Methode des "Harmonic Modelling" in Kombination mit obiger Verfahrensweise für hochfrequente Spektralanteile angewandt werden.

**Patentansprüche**

1. Verfahren zur Vergrößerung der Bandbreite von schmalbandigen Sprachsignalen, wobei:

   - eine Kurzzeitspektralanalyse eines Sprachsignals erfolgt,
   - das berechnete Spektrum mit gespeicherten Spektren verglichen wird und
   - das berechnete Spektrum um darin nicht enthaltene Spektralanteile ergänzt wird,

   **dadurch gekennzeichnet,**
   daß das berechnete und die gespeicherten Spektren linear prädiktiv codiert werden, daß die gespeicherten LPC-Spektren breitbandig sind und unmittelbar zur Festlegung der zu ergänzenden Spektralanteile benutzt werden und daß die Amplitude des aus dem Speicher (SP) ausgelesenen LPC-Spektrums derart eingestellt wird, daß die LPC-Spektren im Übertragungsfrequenzband des übertragenen schmalbandigen LPC-Spektrums eine maximale Übereinstimmung aufweisen.

2. Verfahren zur Vergrößerung der Bandbreite von schmalbandigen Sprachsignalen, wobei:

   - eine Kurzzeitspektralanalyse eines Sprachsignals erfolgt,
   - das berechnete schmalbandige Spektrum mit gespeicherten schmalbandigen Spektren verglichen wird,
   - jedem gespeicherten schmalbandigen ein breitbandiges Spektrum zugeordnet ist, welches die bei der Wiedergabe erforderliche Bandbreite aufweist und
   - das berechnete schmalbandige Spektrum um darin nicht enthaltene Spektralanteile eines gespeicherten breitbandigen und dem schmalbandigen zugeordneten Spektrums ergänzt wird,

   **dadurch gekennzeichnet**, daß das berechnete und auch die gespeicherten Spektren linear prädiktiv codiert sind und daß die Amplitude des aus dem Speicher (SP) ausgelesenen LPC-Spektrums derart eingestellt wird, daß die LPC-Spektren im Übertragungsfrequenzband des übertragenen schmalbandigen LPC-Spektrums eine maximale Übereinstimmung aufweisen.

3. Verfahren nach Anspruch 1 oder 2,
   **dadurch gekennzeichnet,**
   daß in einem Speicher (SP) zu jedem LPC-Spektrum ein Korrekturfaktor für den Multiplizierer (MUL) gespeichert ist, durch den eine aufwandsgünstige Amplitudenanpassung der ergänzten Spektralkomponenten anhand eines LPC-Prädiktionsfehlersignals oder eines Anregungssignals (AR) erreicht wird.

4. Verfahren nach einem der Ansprüche 1 oder 2,
   **dadurch gekennzeichnet,**
   daß die Amplitude des aus einem Speicher (SP) ausgelesenen LPC-Spektrums derart eingestellt wird, daß die LPC-Spektren im Übertragungsfrequenzband mit einem übertragenen schmalbandigen LPC-Spektrum eine maximale Übereinstimmung aufweisen.

5. Verfahren nach einem der Ansprüche 1 bis 4,
   **dadurch gekennzeichnet,**
   daß zur Beurteilung der Übereinstimmung der Spektren das Log-Spectral-Deviation-Maß oder das Itakura-Saito-Abstandsmaß der zu vergleichenden Spektren verwendet wird.

6. Verfahren nach einem der Ansprüche 2 bis 5,
   **dadurch gekennzeichnet,**
   daß zur Erzeugung eines Codebuches mit schmalbandigen Einhüllenden bandbegrenzte Sprachproben verwendet werden und daß zur Erzeugung eines zugeordneten Codebuches mit breitbandigen Einhüllenden die jeweils zugehörigen breitbandigen Versionen derselben Sprachproben verwendet werden.

**7.** Schaltungsanordnung zur Durchführung des Verfahrens nach einem der Ansprüche 1 bis 6,
**dadurch gekennzeichnet,**
daß ein Übertragungssignal einer Schaltung zur Frequenzregeneration (FR) zugeleitet wird, daß die Frequenzregeneration (FR) mit einem Multiplizierer (MUL) verbunden ist, daß der Multiplizierer mit einer Steuereinheit (DSP) verbunden ist, daß der Multiplizierer mit einem ersten LPC-Synthesefilter (LPCS1) verbunden ist und daß die Steuereinheit mit einem Speicher (SP) verbunden ist.

**8.** Schaltungsanordnung nach Anspruch 7,
**dadurch gekennzeichnet,**
daß ein zweites LPC-Synthesefilter (LPCS2) mit einem Überabtaster (AT) verbunden ist, daß der Überabtaster (AT) mit einem ersten Ausgangsfilter (AF1) verbunden ist, daß die Schaltungsanordnung zur Bandbreitenvergrößerung (BBV) mit einem zum ersten Ausgangsfilter (AF1) komplementären Ausgangsfilter (AF2) verbunden ist und daß die Ausgangsfilter (AF1, AF2) mit den Eingängen eines Addierers (AD) verbunden sind.

## Claims

**1.** Method for increasing the bandwidth of narrow-band speech signals, in which:

- a short-term spectral analysis is made of a speech signal,
- the calculated spectrum is compared with stored spectra, and
- the calculated spectrum is supplemented with spectral components not contained therein,

characterized in that the calculated and the stored spectra are coded in a linear predictive manner, in that the stored LPC spectra are broad-band and are immediately used to determine the spectral components to be supplemented, and in that the amplitude of the LPC spectrum read out of the memory (SP) is adjusted so that the matching of the LPC spectra in the transmission frequency band of the transmitted narrow-band LPC spectrum is at a maximum.

**2.** Method for increasing the bandwidth of narrow-band speech signals, in which

- a short-term spectral analysis is made of a speech signal,
- the calculated narrow-band spectrum is compared with stored narrow-band spectra,
- there is assigned to every stored narrow-band spectrum a broad-band spectrum which has the necessary bandwidth during reproduction, and
- the calculated narrow-band spectrum is supplemented with spectral components, not contained therein, of a stored broad-band spectrum assigned to the narrow-band spectrum,

characterized in that the calculated and also the stored spectra are coded in a linear predictive manner and in that the amplitude of the LPC spectrum read out of the memory (SP) is adjusted so that the matching of the LPC spectra in the transmission frequency band of the transmitted narrow-band LPC spectrum is at a maximum.

**3.** Method according to Claim 1 or 2, characterized in that there is stored in a memory (SP) for every LPC spectrum a correction factor for the multiplier (MUL) by which a less complex amplitude matching of the supplemented spectral components is achieved on the basis of an LPC prediction error signal or an excitation signal (AR).

**4.** Method according to one of Claims 1 or 2, characterized in that the amplitude of the LPC spectrum read out of a memory (SP) is adjusted so that the matching of the LPC spectra in the transmission frequency band and a transmitted narrow-band LPC spectrum is at a maximum.

**5.** Method according to one of Claims 1 to 4, characterized in that the log spectral deviation factor or the Itakura Saito differential factor of the spectra to be compared is used to assess the matching of the spectra.

**6.** Method according to one of Claims 2 to 5, characterized in that band-limited speech samples are used to generate a code book having narrow-band envelopes and in that the respective associated broad-band versions of the same speech samples are used to generate an assigned code book having broad-band envelopes.

**7.** Circuit for carrying out the method according to one of Claims 1 to 6, characterized in that a transmission signal is fed to a frequency regeneration circuit (FR), in that the frequency regeneration circuit (FR) is connected to a multiplier (MUL), in that the multiplier is connected to a control unit (DSP), in that the multiplier is connected to a first LPC synthesis filter (LPCS1) and in that the control unit is connected to a memory (SP).

8. Circuit according to Claim 7, characterized in that a second LPC synthesis filter (LPCS2) is connected to an oversampler (AT), in that the oversampler (AT) is connected to a first output filter (AF1), in that the bandwidth-increasing circuit (BBV) is connected to an output filter (AF2) complementary to the first output filter (AF1) and in that the output filters (AF1, AF2) are connected to the inputs of an adder (AD).

**Revendications**

1. Procédé pour augmenter la largeur de bande de signaux vocaux à bande étroite, selon lequel :

   - on effectue une analyse spectrale de brève durée d'un signal vocal,
   - on compare le spectre calculé à des spectres mémorisés, et
   - on complète le spectre calculé, avec des composantes spectrales qui n'y sont pas contenues,

   caractérisé en ce qu'on réalise un codage linéaire prédictif des spectres calculés et des spectres mémorisés, que les spectres LPC mémorisés sont à large bande et qu'on les utilise directement pour la détermination des composantes spectrales à compléter, et qu'on règle l'amplitude du spectre LPC lu à partir de la mémoire (SP) de manière que les spectres LPC présentent une concordance maximale dans la bande des fréquences de transmission du spectre LPC transmis à bande étroite.

2. Procédé pour augmenter la largeur de bande de signaux vocaux à bande étroite, selon lequel :

   - on effectue une analyse spectrale de brève durée d'un signal vocal,
   - on compare le spectre calculé à bande étroite à des spectres mémorisés à bande étroite, et
   - à chaque spectre mémorisé à bande étroite est associé un spectre à large bande, qui possède la largeur de bande nécessaire pour la reproduction, et
   - on complète le spectre calculé à bande étroite avec des composantes spectrales, qui n'y sont pas contenues, d'un spectre mémorisé à large bande et d'un spectre associé à bande étroite,

   caractérisé en ce que les spectres calculés et également les spectres mémorisés sont codés selon un codage linéaire prédictif et qu'on règle l'amplitude du spectre LPC lu à partir de la mémoire (SP) de telle sorte que les spectres LPC présentent une concordance maximale dans la bande des fréquences de transmission du spectre LPC à bande étroite transmis.

3. Procédé selon la revendication 1 ou 2, caractérisé en ce que dans une mémoire (SP) est mémorisé, pour chaque spectre LPC, un facteur de correction pour le multiplicateur (MUL), grâce auquel on obtient une adaptation d'amplitude, avantageuse du point de vue dépense, de la composante spectrale complétée sur la base d'un signal d'erreur de prédiction LPC ou d'un signal d'excitation (AR).

4. Procédé selon la revendication 1 ou 2, caractérisé en ce que l'amplitude du spectre LPC lu dans une mémoire (SP) est réglée de telle sorte que les spectres LPC dans la bande des fréquences de transmission présentant un spectre LPC à bande étroite transmis présentent une concordance maximale.

5. Procédé selon l'une des revendications 1 à 4, caractérisé en ce que pour l'évaluation de la concordance des spectres, on utilise la mesure Log-Spectral-Deviation (écart spectral logarithmique) ou la mesure de distance d'Itakura-Saito des spectres à comparer.

6. Procédé selon l'une des revendications 2 à 5, caractérisé en ce que pour la production d'un livre de codes avec des enveloppes à bande étroite, on utilise des échantillons vocaux à bande limitée et que pour la production d'un livre de code associé avec des enveloppes à large bande, on utilise des versions à large bande, respectivement associées, des mêmes échantillons vocaux.

7. Circuit pour la mise en oeuvre du procédé selon l'une des revendications 1 à 6, caractérisé en ce qu'on envoie un signal de transmission à un circuit de régénération de fréquence (FR), que le circuit de régénération de fréquence (FR) est relié à un multiplicateur (MUL), que le multiplicateur est relié à une unité de commande (DSP), que le multiplicateur est connecté à un premier filtre synthétiseur de LPC (LPCS1) et que l'unité de commande est connectée à une mémoire (SP).

8. Montage selon la revendication 7, caractérisé en ce qu'un second filtre de synthèse de LPC (LPCS2) est connecté à un dispositif de suréchantillonnage (AT), que le dispositif de suréchantillonnage (AT) est relié à un premier filtre de sortie (AF1), que le montage pour l'accroissement de la largeur de bande (BBV) est relié à un filtre de sortie (AF2) complémentaire du premier filtre de sortie (AF1) et que les filtres de sortie (AF1,AF2) sont reliés aux entrées d'un additionneur (AD).

Fig. 1

Fig. 2